(19) **Europäisches Patentamt / European Patent Office / Office européen des brevets**

(11) **EP 3 303 232 B1**

(12) **FASCICULE DE BREVET EUROPEEN**

(45) Date de publication et mention de la délivrance du brevet:
**13.03.2019 Bulletin 2019/11**

(21) Numéro de dépôt: **16733156.0**

(22) Date de dépôt: **30.05.2016**

(51) Int Cl.:
*C03B 5/235* (2006.01)   *F27D 17/00* (2006.01)
*C03B 5/237* (2006.01)

(86) Numéro de dépôt international:
**PCT/FR2016/051289**

(87) Numéro de publication internationale:
**WO 2016/193608 (08.12.2016 Gazette 2016/49)**

(54) **FOUR A INJECTION SONIQUE**

SCHALLINJEKTIONSOFEN

SONIC INJECTION FURNACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2015 FR 1555009**

(43) Date de publication de la demande:
**11.04.2018 Bulletin 2018/15**

(73) Titulaires:
• **Verallia France**
  **92400 Courbevoie (FR)**
• **Saint-Gobain Glass France**
  **92400 Courbevoie (FR)**

(72) Inventeurs:
• **HAYAU, Frédéric**
  **92150 Suresnes (FR)**
• **GARNIER, Laurent**
  **71620 Saint Martin en Bresse (FR)**

(74) Mandataire: **Saint-Gobain Recherche**
  **B.P. 135**
  **39, quai Lucien Lefranc**
  **93303 Aubervilliers Cedex (FR)**

(56) Documents cités:
**EP-A1- 2 508 827    US-A- 4 347 072**
**US-A- 4 372 770    US-A- 5 203 859**

**Description**

L'invention concerne le domaine des fours à boucle à bas NOx pour la fusion du verre.

L'homme du métier désigne généralement par « NOx » les émissions d'oxyde d'azote du type NO et/ou $NO_2$ provenant de l'oxydation non-souhaitée d'azote. Une source importante d'azote est celui contenu dans le comburant tel que l'air ou l'air enrichi en oxygène.

La plupart des procédés de combustion, notamment ceux utilisés dans les fours de verrerie, sont confrontés à des problèmes d'émission non désirée de NOx dans les fumées de combustion. Les NOx ont une influence néfaste à la fois sur l'être humain et sur l'environnement. En effet, d'une part le $NO_2$ est un gaz irritant à la source de maladies respiratoires. D'autre part, au contact de l'atmosphère, ils peuvent former progressivement des pluies acides. Enfin, ils engendrent une pollution photochimique puisqu'en combinaison avec les composés organiques volatiles et le rayonnement solaire, les NOx sont à l'origine de la formation de l'ozone dite troposphérique dont l'augmentation de concentration à basse altitude devient nocive pour l'être humain, surtout en période de forte chaleur. C'est pourquoi les normes sur l'émission de NOx deviennent de plus en plus exigeantes. Du fait même de l'existence de ces normes, les fabricants et les exploitants de four tels que ceux des fours verriers se préoccupent de manière constante de limiter au maximum les émissions de NOx, de préférence à un taux inférieur à 800 mg/Nm³ normalisé à 8% d'oxygène sur fumée sèche. Dans le cadre de la présente demande, les taux de NOx sont toujours exprimés en mg/Nm³ normalisé à 8% d'oxygène sur fumée sèche, unité habituellement utilisée par l'homme du métier. L'homme du métier considère généralement qu'un taux de NOx inférieur à 700 mg/Nm³ est déjà un bon taux et qu'un taux de NOx inférieur à 600 mg/Nm³ est très bon. Il est utile de savoir obtenir des taux de NOx encore plus bas.

Les fours de fusion du verre sont conçus pour fonctionner pendant plusieurs dizaines d'années et leur construction est onéreuse. C'est pourquoi leur design évolue lentement. En effet, la réalisation d'essais dans des fours industriels est rendue presqu'impossible tant la prise de risque est élevée si l'on change des paramètres de fonctionnement comme des dimensions de dispositif. Notamment, les arrivées d'air débouchant dans les parois du four sont des conduits en céramique réfractaire dont on ne peut pas facilement modifier les dimensions sans devoir arrêter le four pour en reconstruire une bonne partie. C'est pourquoi on ne peut pas modifier facilement le design du four pour modifier les écoulements au sein de la chambre de combustion et en particulier l'impulsion de l'air sans changer son débit.

L'impulsion I d'un jet gazeux délivré par un injecteur est donnée par la formule :

$$I = Q_m.V + S.\Delta P$$

Dans laquelle :

- $Q_m$ représente le débit massique du jet gazeux ;
- V représente la vitesse du gaz à la sortie de l'injecteur ;
- S représente l'aire de la section de l'injecteur à sa sortie
- $\Delta P$ représente la différence de pression entre la sortie de l'injecteur et la pression dans l'enceinte.

Le terme « sonique » qualifiant un jet gazeux spécifie que ledit jet a la vitesse du son à la température du gaz injecté (température à la sortie de l'injecteur).

Le EP2508827A1 enseigne l'injection d'un gaz oxydant dans une paroi latérale d'un four à boucle afin de terminer la combustion du carburant, selon le principe de la combustion étagée. Cette injection est réalisée en biais à la fois en direction de la paroi amont et en direction de la paroi opposée et donc plutôt dans le même sens que le flux des fumées de combustion. La recirculation des gaz en est fortement intensifiée, ce qui serait censé réduire la concentration en NOx, sans pour autant que des exemples précis de réalisation soient donnés. Ce document enseigne qu'il est difficile de descendre en-dessous de 1100 mg/Nm³ de NOx et propose une solution pour descendre le taux de NOx en-dessous de cette valeur. Les inventeurs de la présente invention ont pu déterminer que la recirculation horizontale dans le laboratoire du four est effectivement augmentée, Cependant, la recirculation verticale est aussi diminuée. La flamme n'est pas fortement étalée vue de dessus parallèlement à la surface du verre. Le développement de la flamme est alors confiné et restreint dans une zone proche de la paroi latérale opposée à celle contenant l'injecteur de gaz. Ce rapprochement de la flamme à l'état concentré près de la paroi latérale provoque une augmentation de la température de la paroi latérale, ce qui est très défavorable à sa tenue avec le temps. De plus, la dilution de la flamme est partielle et en fait peu efficace. En effet, ces fortes recirculations interagissent peu avec la flamme, ce qui est de peu d'efficacité en termes de réduction de NOx. Les inventeur de la présente invention ont pu déterminer que cette solution était peut efficace pour descendre le taux de NOx d'un four qui est déjà à moins de 700 mg/Nm³ sans aucune injection additionnelle de gaz.

Selon l'invention, on a maintenant trouvé un moyen simple d'influer sur la combustion de flamme en jouant sur les écoulements gazeux au sein de la chambre de combustion et sans avoir à se livrer à des démontages importants de réfractaire formant les parois d'un four et notamment les arrivées d'air. On a en effet simplement disposé au moins un injecteur de gaz comprimé en régime sonique ou supersonique ou quasi-sonique (ce qui signifie au moins 80% de la vitesse sonique), dit « injecteur sonique » à proximité du conduit de réception des fumées ou dans le conduit de réception des fumées et à contre-courant du flux des fumées. On s'est alors aperçu du grand avantage apporté par cet injecteur sonique pour réduire le taux de NOx. Dans le cadre de la présente demande, un injecteur sonique délivre son gaz à une vitesse d'au moins 80% et de préférence d'au moins 95% de la vitesse sonique. Généralement, cette vitesse ne dépasse pas 300% de la vitesse sonique. La forme de l'extrémité de l'injecteur sonique permet de dépasser ou non la vitesse sonique. Pour la dépasser, il convient d'utiliser un injecteur à forme convergente puis divergente. Les injecteurs habituellement utilisés dans le domaine verrier présentent une extrémité convergente. Cette configuration permet d'atteindre la vitesse sonique sans pouvoir la dépasser.

L'invention concerne un four à boucle pour la fusion de verre muni d'un brûleur aérien comprenant un conduit d'arrivée de comburant comprenant 15 à 30% d'oxygène dans sa paroi amont, un conduit de réception des fumées de combustion dans sa paroi amont, et un système d'injection sonique comprenant au moins un injecteur d'un jet d'un gaz à vitesse au moins égale à 80% de la vitesse sonique, dit injecteur sonique, débouchant dans la paroi amont ou débouchant dans le conduit de réception des fumées de combustion, ledit injecteur sonique injectant son gaz à contre-courant du flux des fumées de combustion se dirigeant vers le conduit de réception des fumées de combustion.

L'invention permet l'obtention de taux de NOx dans les fumées excellents puisque pouvant être inférieur à 600 et même inférieur à 570 mg/Nm$^3$ et même inférieur à 500 mg/Nm$^3$, voire même inférieurs à 450 mg/Nm$^3$. L'injection du gaz sonique à contre-courant des fumées de combustion favorise la recirculation verticale des gaz de combustion au-dessus de la flamme. En effet, la simulation numérique des écoulements de gaz dans le volume de laboratoire a montré que l'injection de gaz sonique selon l'invention inhibait la recirculation horizontale pour favoriser la recirculation verticale au-dessus de la flamme. Ceci est favorable à l'étalement de la flamme sur la surface du verre et donc au transfert de chaleur vers le verre et aussi à l'augmentation de la surface d'échange entre la flamme et les gaz de combustion. En conséquence, la dilution de la flamme dans les gaz de combustion est augmentée et la concentration en NOx est diminuée.

Le système d'injection sonique peut ne comprendre qu'un seul injecteur sonique (injecteur d'un jet d'un gaz à vitesse au moins égale à 80% de la vitesse sonique) ou une pluralité d'injecteur sonique, c'est-à-dire 2 ou 3 ou 4 ou 5 ou 6 voire plus, injecteurs soniques.

Le comburant est généralement de l'air. Le conduit d'arrivée de comburant apporte l'essentiel du comburant, c'est-à-dire au moins 95% du débit de comburant total rentrant dans la chambre de combustion, le reste étant de l'air induit. Ce conduit d'arrivée de comburant est formé par une ouverture dans une paroi en matériau réfractaire.

Il semble que le jet de gaz comprimé envoyé par l'injecteur sonique dans la fumée de combustion contribue à modifier sensiblement le trajet et la recirculation des flux gazeux dans le four. La flamme ainsi produite dans le four est plus diluée, la chaleur qu'elle apporte est ainsi répartie sur une plus grande longueur et les temps de séjour des fumées dans la chambre de combustion sont globalement augmentés. Ceci est favorable à deux titres:

a) moins de NOx sont formés en raison de la plus faible température de flamme,
b) les réfractaires du four sont moins sollicités en température et voient de ce fait leur durée de vie augmentée.

L'injecteur sonique débouche dans la paroi comprenant le conduit de réception des fumées de combustion ou débouche dans le conduit de réception des fumées de combustion et injecte le gaz sonique à contre-courant du flux des fumées de combustion se dirigeant (dans la chambre de combustion) vers la paroi amont. Les termes « amont » et « aval » se réfèrent au sens d'écoulement du verre qui coule de l'amont vers l'aval. Dans un four à boucle, la flamme part d'un brûleur (c'est-à-dire l'ensemble formé par le conduit d'arrivée de comburant et le ou les injecteurs de combustible) de la paroi amont pour aller vers l'aval, puis tourne pour revenir vers le conduit de réception des fumées de combustion situé également dans la paroi amont et à côté du conduit d'arrivée de comburant. Selon l'invention, l'injecteur sonique injecte son gaz dans la direction de l'amont vers l'aval, mais à contre-courant des fumées de combustion, c'est-à-dire en rencontrant le flux de fumées lorsque celui-ci se dirige vers le conduit de réception des fumées dans la paroi amont, et en sens inverse à celui du flux de fumées. Pour ce faire, de préférence, tout injecteur sonique du système d'injection sonique débouche dans le conduit de réception des fumées ou dans la paroi amont en un point plus proche du conduit de réception des fumées que du conduit d'arrivée de comburant. De préférence, tout injecteur sonique du système d'injection sonique débouche à moins d'1 m et même à moins de 0,5 m du bord du conduit de réception des fumées. Ceci vaut pour le cas où l'injecteur sonique débouche dans le conduit de réception des fumées ou dans la paroi amont. Le bord du conduit de réception des fumées est le contour formé par le conduit de réception des fumées dans la paroi comprenant ledit conduit, c'est-à-dire la paroi amont, du côté de la chambre de combustion. Même si, le cas échéant, l'injecteur sonique débouche à l'intérieur du conduit de réception des fumées, il est suffisamment puissant pour perturber l'écoulement du flux de fumées encore dans le four et se dirigeant vers le conduit de réception des fumées. C'est pourquoi, lorsqu'on dit que le gaz sonique injecte son gaz à contre-courant du flux des fumées de combustion se dirigeant vers la paroi amont, il s'agit du flux des fumées encore dans le four et allant rentrer dans le conduit de réception des fumées.

Le vecteur représentant la vitesse du gaz à la sortie d'un injecteur sonique a une composante non-nulle parallèle au flux des fumées rentrant dans le conduit de réception des fumées et en sens inverse à la direction de ce flux. On peut considérer que le flux des fumées rentrant dans le conduit de réception des fumées a une direction sensiblement perpendiculaire à la paroi amont du four comprenant le conduit de réception des fumées. De préférence, la composante d'impulsion du système d'injection sonique perpendiculairement à la paroi comprenant le conduit de réception des fumées de combustion est supérieure à 5 Newtons et de préférence supérieure à 10 Newton. Selon cette dernière caractéristique, on prend en compte tous les injecteurs soniques du système d'injection sonique et l'on détermine la composante globale du système perpendiculairement à la paroi amont. Cette composante est la résultante de toutes les composantes d'impulsion éjectées par tous les injecteurs soniques perpendiculairement à la paroi comprenant le conduit de réception des fumées de combustion. Cette composante est supérieure à 5 Newtons et de préférence supérieure à 10 Newton.

Le gaz comprimé injecté par l'injecteur sonique peut être de toute nature et peut notamment être du gaz naturel ou de l'oxygène mais est préférentiellement de l'air.

Les fours à boucle (end-fired furnace en anglais) sont bien connus de l'homme du métier de la fusion du verre. La paroi amont d'un four à boucle comprend deux ouvertures fonctionnant alternativement en conduit d'arrivée de comburant et en conduit de réception des fumées. Pour le fonctionnement d'un four à boucle, on peut notamment se référer au WO2008/078049 et notamment ses figures 1 et 2. Ainsi, pour faire fonctionner la présente invention, on munit chacune de ces deux ouvertures d'un système d'injection sonique mais on ne fait fonctionner que celui associé à l'ouverture fonctionnant en conduit de réception des fumées. Quand on inverse le fonctionnement du four, on inverse aussi le fonctionnement de ces deux systèmes d'injection sonique. On arrête donc celui associé à l'ouverture devenue conduit d'arrivée de comburant et on met en service celui associé à l'ouverture devenue conduit de réception des fumées.

Le conduit d'arrivée de comburant débouche dans la chambre de combustion du four par une ouverture dans la paroi amont du four en matériau réfractaire. La voûte de ce conduit descend généralement dans le sens de circulation du comburant pour former un angle avec l'horizontale compris entre 14 et 30°. Ainsi le comburant est dirigé vers le flux de combustible puisque ce dernier est généralement injecté par des injecteurs situés sous le conduit d'arrivée de comburant. Ces injecteurs de combustible peuvent être orientés pour que leurs jets soient légèrement dirigés vers le haut en direction du flux de comburant. La direction d'émission du combustible peut généralement former un angle avec l'horizontale compris entre 0 et 15°, notamment entre 3 et 15° vers le haut. Le conduit d'arrivée de comburant et son ou ses injecteurs de combustible constituent un brûleur. Généralement, plusieurs injecteurs de combustible sont utilisés et sont placés sous la veine d'air. Ces injecteurs de combustible sont répartis sous la veine d'air, l'un à côté de l'autre vue de dessus, de sorte à étaler la flamme vue de dessus parallèlement à la surface du verre. Un régénérateur est généralement placé derrière chacune des deux ouvertures de la paroi amont du four. Le comburant traverse un régénérateur et est réchauffé par lui avant d'arriver au conduit d'arrivée de comburant. Lorsqu'on procède à l' « inversion » du four, le conduit d'arrivée de comburant devient conduit de réception des fumées et le régénérateur associé audit conduit est alors réchauffé par les fumées. Les régénérateurs sont remplis d'éléments réfractaires (briques, cruciformes, etc...) formant un réseau parcouru par les fumées ou le comburant selon la phase de fonctionnement. Lorsque le régénérateur est traversé par la fumée, la chaleur de la fumée est transmise aux éléments réfractaires du régénérateur. Lorsque le régénérateur est traversé par le comburant, la chaleur des éléments réfractaires du régénérateur chauffe le comburant. Le comburant dans le conduit d'arrivée de comburant est sensiblement à la pression atmosphérique et généralement à une pression légèrement supérieure à la pression atmosphérique, soit une pression comprise entre la pression atmosphérique et la pression atmosphérique + 100 Pa, en pression absolue.

Ainsi, dans le four à boucle selon l'invention, la section du conduit d'arrivée de comburant dans la paroi amont est généralement comprise dans le domaine allant de 0,5 à 3 $m^2$. Le conduit de réception des fumées est généralement identique à celui d'arrivée de comburant puisque chacun de ces conduits joue alternativement le rôle de fournir du comburant et de réceptionner les fumées. Ainsi, la section du conduit de réception des fumées dans la paroi amont est généralement comprise dans le domaine allant de 0,5 à 3 $m^2$.

Un ou plusieurs injecteurs soniques, notamment, deux ou trois ou quatre ou cinq ou six injecteurs soniques voire plus, peuvent équiper un conduit de réception des fumées en formant un système d'injection sonique selon l'invention. Un injecteur sonique peut être constitué par un tuyau en métal réfractaire, notamment en acier inoxydable, inséré dans un orifice réalisé dans la matière réfractaire du conduit de réception des fumées ou entourant le conduit de réception des fumées.

Un injecteur sonique peut déboucher dans le four au-dessus ou en-dessous ou sur les côtés du conduit de réception de fumées ou dans le conduit de réception de fumées lui-même. De préférence, l'axe de l'injecteur sonique est dirigé vers le flux de fumées se dirigeant vers la paroi amont et à contre-courant de celui-ci.

La section d'éjection du système d'injection sonique a de préférence une section totale comprise dans le domaine allant de 0,2 à 4 $cm^2$. Pour le cas où un seul injecteur sonique est utilisé, il s'agit de la section à l'extrémité de l'injecteur sonique. Pour le cas où le système d'injection sonique comprend plusieurs injecteurs soniques, il s'agit de la somme des sections d'éjection du gaz par tous les injecteurs soniques.

Le système d'injection sonique délivre du gaz à raison de 0,2 à 5 % et de préférence de 0,2 à 2% du volume Normal de comburant introduit par le conduit d'arrivée de comburant. On prend donc ici la somme des volumes de gaz délivrés par tous les injecteurs du système d'injection sonique.

L'invention concerne également un procédé de préparation de verre fondu comprenant la fusion de verre dans le four à boucle selon l'invention. Notamment, la quantité de comburant introduite dans le four est de préférence en excès par rapport à la quantité de combustible introduite dans le four. Notamment, la quantité de comburant introduite dans le four hors via le système d'injection sonique est de préférence en excès par rapport à la quantité de combustible introduite dans le four hors via le système d'injection sonique.

Les figures ne sont pas l'échelle.

La figure 1 représente un four à boucle selon l'invention vu de côté en coupe.

La figure 2 montre différents systèmes d'injection sonique pouvant être associés à un conduit de réception des fumées dans un four selon l'invention.

La figure 3 représente en vue de côté et en coupe un conduit de réception des fumées muni d'un injecteur sonique débouchant dans la même paroi amont du four selon l'invention.

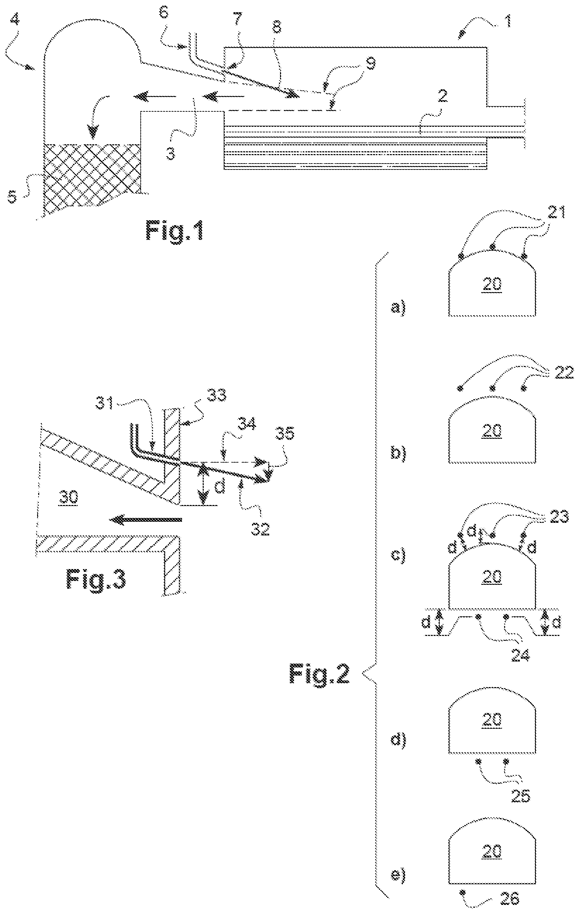

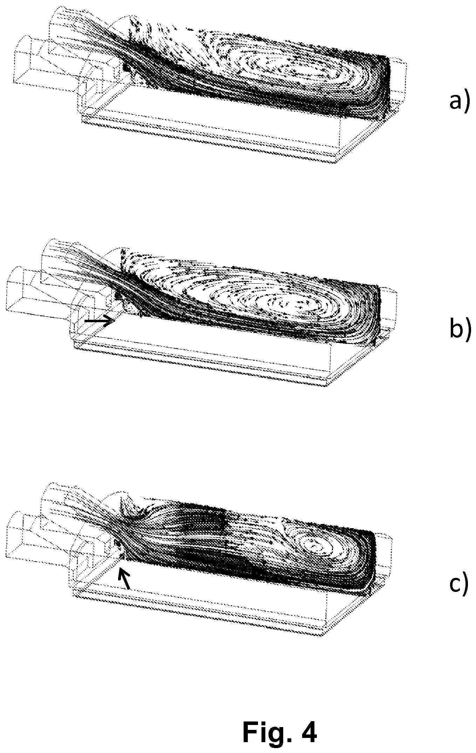

La figure 4 est une représentation des écoulements gazeux dans un four à boucle selon différentes configurations. La figure 1 représente un four à boucle 1 vu de côté en coupe, le verre en fusion 2 s'écoulant de gauche à droite. La coupe est réalisée au travers du conduit 3 de réception des fumées, lesquelles sont dirigées dans le régénérateur 4 contenant des éléments réfractaires 5 que les fumées vont réchauffer. Après inversion de phase, cette ouverture servira de conduit d'arrivée de comburant de brûleur pour une flamme, ledit comburant étant alors réchauffé par les éléments réfractaire 5. Tel que représenté, le conduit est en phase de réception des fumées. Un injecteur de gaz comprimé 6 débouche dans la paroi amont 7 qui est aussi la paroi dans laquelle le conduit de réception des fumées débouche. Le jet 8 de gaz comprimé est dirigé vers le flux de fumées (matérialisé par des lignes pointillés 9) se dirigeant vers le conduit de réception des fumées, tout en étant à contre-courant de lui.

La figure 2 montre différents systèmes d'injection sonique pouvant être associés à un conduit de réception des fumées 20. Ces différentes configurations sont illustrées par les exemples. Le système d'injection sonique peut comprendre 3 injecteurs 21 et se trouver juste au-dessus du conduit de réception des fumées 20 (Fig 2a) ou à une certaine distance au-dessus des fumées (fig 2b). Les injecteurs du système d'injection sonique peuvent se trouver sous le conduit de réception des fumées (fig 2d). En figure 2e, un seul injecteur 26 est utilisé et se trouve sous le conduit de réception des fumées 20. L'injecteur est ici un peu sur la gauche, du côté de l'axe longitudinal du four. En figure 2c), on a combiné dans le système d'injection sonique des injecteurs soniques au-dessus et au-dessous du conduit de réception des fumées. On a noté par « d » ce que l'on entend par la distance entre l'injecteur et le bord du conduit. Compte tenu du faible diamètre de l'injecteur sonique, la distance d est prise à partir de son axe.

La figure 3 représente un conduit 30 de réception des fumées vue de côté muni d'un injecteur sonique (31) débouchant dans la même paroi amont 33 du four. L'injecteur sonique est à la distance d du bord du conduit. L'injecteur sonique délivre son gaz avec une impulsion représentée par le vecteur 32, lequel peut être décomposé en une composante 34 perpendiculaire à la paroi amont 33 et une autre composante 35 parallèle à la paroi.

La figure 4 est une représentation des écoulements gazeux dans un four à boucle de référence sans injection supplémentaire de gaz par une paroi (configuration a), dans un four à boucle avec injection sonique selon l'invention (configuration b), dans un four à boucle avec injection sonique en paroi latérale (configuration c).

Exemples 1à 10

Les essais ont été réalisés avec un four à boucle comprenant deux brûleurs fonctionnant en inversion, de puissance 13,3 mégawatts et dont le comburant était l'air. Chaque conduit d'arrivée arrivée d'air avait une aire de 1,55 $m^2$ (2200 mm de largeur et 800 mm de hauteur). Le four était alimenté en matière vitrifiable du type sodocalcique dont 95% en poids de calcin. Il fonctionnait avec une tirée de 330 tonnes par jour. Le four avait une surface de 94 $m^2$. La température du verre en sortie du four était d'environ 1300°C. La voûte était à une température d'environ 1600°C.

Un ou plusieurs injecteurs soniques d'air comprimé étaient placés à proximité du conduit de réception des fumées de combustion pour former des systèmes d'injection sonique. Ces injecteurs présentaient une extrémité convergente. Le gaz injecté était à 25°C. Le tableau 1 donne les différentes conditions opératoires ainsi que les résultats en termes de taux de NOx dans les fumées. On a testé quatre positions possibles d'injecteur sonique :

- juste au-dessus de la réception de fumées : l'injecteur est exactement au bord du conduit de réception des fumées avec un angle de 20° vers le bas par rapport à l'horizontale ;
- un peu au-dessus du conduit de réception des fumées : l'injecteur est 400 mm au-dessus de la cote supérieure du conduit de réception des fumées avec un angle de 20° vers le bas par rapport à l'horizontale ;
- sous le conduit de réception des fumées : l'injecteur est à 250 mm sous le conduit de réception des fumées avec un angle de 5° vers le haut par rapport à l'horizontale.

Tous les injecteurs soniques d'air comprimé au-dessus du conduit de réception des fumées avaient un diamètre interne de 5 mm. Les injecteurs soniques d'air comprimé en-dessous du conduit de réception des fumées avaient un diamètre interne de 6 mm.

Dans le tableau 1, on a indiqué :

- la pression relative : c'est la pression du réservoir alimentant l'injecteur sonique;
- le débit : c'est le débit total d'air comprimé (somme des débits de tous les injecteurs soniques);
- la vitesse injection : c'est la vitesse de l'air à la sortie de l'injecteur sonique d'air comprimé ;
- impulsion sonique : c'est la somme des impulsions des injecteurs soniques (dans le cas de l'exemple 2, aucune injection n'est sonique mais on a tout de même fait figurer l'impulsion du gaz à 50% de la vitesse sonique dans la colonne « impulsion sonique » par soucis de simplification) ;
- NOx : c'est la concentration en mg/Nm$^3$ normalisé à 8% d'oxygène sur fumée sèche;
- Variation : c'est la variation de NOx par rapport à une référence (sans injection sonique d'air comprimé).

Les résultats de « variation » des exemples 2 à 7 sont donnés par rapport à l'exemple 1. Les résultats de « variation » des exemples 9 à 10 sont donnés par rapport à l'exemple 8.

## Exemples 11 et 12

Les essais ont été réalisés avec un four à boucle comprenant deux brûleurs fonctionnant en inversion, de puissance 11 mégawatts et dont le comburant était l'air. Chaque conduit d'arrivée d'air de brûleur (ou de réception des fumées, selon la phase d'inversion) avait une aire de 2 m$^2$ (2300 mm de largeur et 960 mm de hauteur). Le four était alimenté en matière vitrifiable du type sodocalcique dont 60% en poids de calcin. Il fonctionnait avec une tirée de 250 tonnes par jour. Le four avait une surface de 85 m$^2$. La température du verre en sortie du four était d'environ 1300°C. La voûte était à une température d'environ 1600°C. Le système d'injection sonique ne comprenait qu'un seul injecteur sonique d'air comprimé avec une extrémité convergente. Celui-ci était placé 300 mm sous le conduit de réception des fumées et à 650 mm du coin inférieur du conduit de réception des fumées le plus proche de l'axe longitudinal du four. L'injecteur sonique injectait son gaz avec un angle de 5° vers le haut par rapport à l'horizontale et présentait un diamètre interne de 8 mm de diamètre. Le gaz injecté était à 25°C.

Le tableau 1 donne les différentes conditions opératoires ainsi que les résultats en termes de taux de NOx dans les fumées.

Tableau 1

| Ex N° | nombre injerteurs juste au-dessus | nombre injecteurs 400 mm au-dessus | nombre injecteurs 250 mm en-dessous | Pression relative [bar] | Débit [Nm3/h] | % vitesse sonique | Vitesse éjection [m/s] | Impulsion sonique [N] | NOx [mg/Nm3] @ 8% O2] | Variation |
|---|---|---|---|---|---|---|---|---|---|---|
| 1 (comp) | | | | | | | | | 601 | - |
| 2 (comp) | 3 | | | 0.2 | 35 | 50 | 174 | 2 | 607 | 1% |
| 3 | 3 | | | 0.7 | 65 | 84 | 289 | 7 | 559 | -7% |
| 4 | 3 | | | 1.7 | 104 | 100 | 346 | 14 | 546 | -9% |
| 5 | 3 | | | 4,2 | 200 | 100 | 346 | 33 | 405 | -33% |
| 6 | 0 | 3 | | 4,2 | 200 | 100 | 346 | 33 | 390 | -35% |
| 7 | | | 2 | 4,2 | 200 | 100 | 346 | 33 | 397 | -34% |
| 8 (comp) | | | | - | - | - | | - | 778 | - |
| 9 | 3 | | | 4.2 | 200 | 100 | 346 | 33 | 494 | -37% |
| 10 | | 3 | 2 | 4.2 | 400 | 100 | 346 | 55 | 354 | -54% |
| | | | | | | | | | | |
| 11 | | | 1 | 3 | 132 | 100 | 345 | 21 | 457 | |
| 12 | | | 1 | 3,5 | 148 | 100 | 346 | 24 | 381 | |

Exemples 13 à 15

On a réalisé des simulations numériques de l'écoulement des fumées de combustion dans un four à boucle en fonctionnement, dans les configurations suivantes :

a) Référence : pas d'injection supplémentaire de gaz (voir figure 4 a));
b) Injection supplémentaire de 181 Nm$^3$/h de gaz sonique en paroi amont conformément à la présente invention ;
c) Injection supplémentaire de 150 Nm$^3$/h de gaz sonique en paroi latérale (voir figure 4 b, l'injection supplémentaire étant symbolisée par une flèche en gras); l'injecteur formait un angle de 60° avec la paroi latérale du côté de la paroi amont et était à une distance de la paroi amont égale à 23% de la longueur totale de la paroi latérale ; cet exemple est donné à titre comparatif et n'est pas selon l'invention.
d) Injection supplémentaire de 150 Nm$^3$/h de gaz sonique en paroi amont (voir figure 4 c, l'injection supplémentaire étant symbolisée par une flèche en gras) conformément à la présente invention.

Le four à boucle comprend deux brûleurs fonctionnant en inversion, de puissance 11 mégawatts et dont le comburant est l'air. Chaque conduit d'arrivée d'air de brûleur (ou de réception des fumées, selon la phase d'inversion) a une aire de 1,55 m$^2$ (2200 mm de largeur et 800 mm de hauteur). Le four a une surface de 94 m$^2$. La température du verre en sortie du four était d'environ 1300°C. Le gaz sonique injecté était à 25°C.

La figure 4 montre l'effet de ces injections sur les écoulements gazeux dans le volume de laboratoire du four. Pour visualiser ces écoulements, on a projeté les vecteurs vitesse dans un plan vertical passant par le milieu du conduit d'arrivée d'air. Cette représentation permet de visualiser la recirculation verticale des gaz. On constate de grandes différences selon les configurations. On voit que l'injection sonique selon l'invention mène à la recirculation la plus élargie dans le volume de laboratoire. De plus les résultats sur les NOx exprimés relativement à une référence sans injection sonique démontrent la supériorité de l'injection selon l'invention, comme le montre le tableau 2. La colonne « variation » donne la concentration en NOx par rapport à la configuration de référence sans injection de gaz supplémentaire (figure 4a). L'injection selon l'invention mène à une réduction respectivement de 15 et 20% des NOx. L'injection de gaz sonique en paroi latérale ne produit pas de réduction substantielle de NOx.

Tableau 2

| Ex N° | nombre injeteurs en paroi latérale | nombre d'injecteurs 250 mm sous le conduit de réception des fumées | Débit [Mm3/h] | % vitesse sonique | Vitesse injection [m/s] | Impulsion sonique [N] | Variation (%) |
|---|---|---|---|---|---|---|---|
| 13 (fig 4b) | | 2 | 181 | 100 | 346 | 27 | -19% |
| 14 (camp) (fig 4c) | 1 | | 150 | 94 | 326 | 17 | -1% |
| 15 | | 1 | 150 | 94 | 326 | 17 | -15% |

**Revendications**

1. Four à boucle (1) pour la fusion de verre muni d'un brûleur aérien comprenant un conduit d'arrivée de comburant comprenant 15 à 30% d'oxygène dans sa paroi amont (33), un conduit (3, 20, 30) de réception des fumées de combustion dans sa paroi amont (33), et un système d'injection sonique comprenant au moins un injecteur (6, 31) d'un jet d'un gaz à vitesse au moins égale à 80% de la vitesse sonique, dit injecteur sonique, débouchant dans la paroi amont (33) ou débouchant dans le conduit (3, 20, 30) de réception des fumées de combustion, la vitesse sonique étant la vitesse du son à la température du gaz injecté à la sortie de l'injecteur, ledit injecteur sonique injectant son gaz (8) à contre-courant du flux (9) des fumées de combustion se dirigeant vers le conduit (3, 20, 30) de réception des fumées de combustion.

2. Four selon la revendication précédente, **caractérisé en ce que** la section du conduit d'arrivée de comburant dans la paroi amont (33) est comprise dans le domaine allant de 0,5 à 3 m$^2$ et **en ce que** la section du conduit de réception des fumées (3, 20, 30) dans la paroi amont (33) est comprise dans le domaine allant de 0,5 à 3 m$^2$.

**3.** Four selon l'une des revendications précédentes, **caractérisé en ce que** la section d'éjection du système d'injection sonique est comprise dans le domaine allant de 0,2 à 4 cm$^2$.

**4.** Four selon l'une des revendications précédentes, **caractérisé en ce que** tout injecteur sonique (21, 22, 23, 24, 25, 26) du système d'injection sonique débouche dans le conduit (3, 20, 30) de réception des fumées ou dans la paroi amont en un point plus proche du conduit (3,20,30) de réception des fumées que du conduit d'arrivée de comburant.

**5.** Four selon l'une des revendications précédentes, **caractérisé en ce que** tout injecteur sonique (21, 22, 23, 24, 25, 26) du système d'injection sonique débouche à moins d'1m du bord du conduit (20) de réception des fumées.

**6.** Four selon la revendication précédente, **caractérisé en ce que** tout injecteur sonique (21, 22, 23, 24, 25, 26) débouche à moins de 0,5m du bord du conduit (3, 20, 30) de réception des fumée.

**7.** Four selon l'une des revendications précédentes, **caractérisé en ce que** le système d'injection sonique comprend plusieurs injecteurs soniques (21,22,23,24,25).

**8.** Four selon l'une des revendications précédentes, **caractérisé en ce que** la composante (34) d'impulsion du système d'injection sonique perpendiculairement à la paroi (33) comprenant le conduit (3, 20, 30) de réception des fumées de combustion est supérieure à 5 Newtons et de préférence supérieure à 10 Newton.

**9.** Four selon l'une des revendications précédentes, **caractérisé en ce que** le gaz est de l'air.

**10.** Four selon l'une des revendications précédentes, **caractérisé en ce que** l'injecteur sonique (6, 31) injecte son gaz à au moins 95 % de la vitesse sonique, la vitesse sonique étant la vitesse du son à la température du gaz injecté à la sortie de l'injecteur.

**11.** Procédé de préparation de verre fondu comprenant la fusion de verre dans le four de l'une des revendications 1 à 7, l'injecteur sonique (6, 31) injectant un jet d'un gaz à vitesse au moins égale à 80% de la vitesse sonique, la vitesse sonique étant la vitesse du son à la température du gaz injecté à la sortie de l'injecteur.

**12.** Procédé selon la revendication précédente, **caractérisé en ce que** l'injecteur sonique (6, 31) injecte son gaz à au moins 95 % de la vitesse sonique.

**13.** Procédé selon l'une des revendications précédentes de procédé, **caractérisé en ce que** la composante (34) d'impulsion du système d'injection sonique perpendiculairement à la paroi (33) comprenant le conduit (3, 20, 30) de réception des fumées de combustion est supérieure à 5 Newtons et de préférence supérieure à 10 Newton.

**14.** Procédé selon l'une des revendications précédentes de procédé, **caractérisé en ce que** le système d'injection sonique délivre du gaz à raison de 0,2 à 5 % et de préférence de 0,2 à 2% du volume Normal de comburant introduit par le conduit d'arrivée de comburant.

**15.** Procédé selon l'une des revendications précédentes de procédé, **caractérisé en ce que** la quantité de comburant introduite dans le four est en excès par rapport à la quantité de combustible introduite dans le four.

**16.** Procédé selon l'une des revendications précédentes de procédé, **caractérisé en ce que** la quantité de comburant introduite dans le four hors via le système d'injection sonique est en excès par rapport à la quantité de combustible introduite dans le four hors via le système d'injection sonique.

**17.** Procédé selon l'une des revendications précédentes de procédé, **caractérisé en ce que** le gaz est de l'air.

**Patentansprüche**

**1.** Wannenofen (1) zum Schmelzen von Glas mit einem Überkopfbrenner, umfassend eine Zuleitung für Oxidationsmittel, das 15 bis 30 % Sauerstoff umfasst, in seiner stromauf gelegenen Wand (33), eine Rauchgasaufnahmeleitung (3, 20, 30) in seiner stromauf gelegenen Wand (33) und ein Schallinjektionssystem, das mindestens einen Injektor (6, 31) für einen Strahl eines Gases mit einer Geschwindigkeit von mindestens 80 % der Schallgeschwindigkeit, Schallinjektor genannt, umfasst, der in die stromauf gelegene Wand (33) mündet oder in die Rauchgasaufnahmeleitung (3, 20, 30) mündet, wobei die Schallgeschwindigkeit die Geschwindigkeit des Schalls bei der Temperatur des eingeleiteten Gases am Auslass des Injektors ist, wobei der Schallinjektor sein Gas (8) im Gegenstrom zum Rauchgasstrom (9) einleitet, der zur Rauchgasaufnahmeleitung (3, 20, 30) gerichtet ist.

2. Ofen nach vorhergehendem Anspruch, **dadurch gekennzeichnet, dass** der Querschnitt der Oxidationsmittelzuleitung in der stromauf gelegenen Wand (33) im Bereich von 0,5 bis 3m$^2$ liegt und dass der Querschnitt der Rauchgasaufnahmeleitung (3, 20, 30) in der stromauf gelegenen Wand (33) im Bereich von 0,5 bis 3 m$^2$ liegt.

3. Ofen nach einem der vorhergehenden Ansprüche, **dadurch gekennzeichnet, dass** der Ausstoßquerschnitt des Schallinjektionssystems im Bereich von 0,2 bis 4 cm$^2$ liegt.

4. Ofen nach einem der vorhergehenden Ansprüche, **dadurch gekennzeichnet, dass** jeder Schallinjektor (21, 22, 23, 24, 25, 26) des Schallinjektionssystems in die Rauchgasaufnahmeleitung (3, 20, 30) oder in die stromauf gelegene Wand an einem Punkt mündet, der näher zur Rauchgasaufnahmeleitung (3, 20, 30) als zur Oxidationsmittelzuleitung ist.

5. Ofen nach einem der vorhergehenden Ansprüche, **dadurch gekennzeichnet, dass** jeder Schallinjektor (21, 22, 23, 24, 25, 26) des Schallinjektionssystems weniger als 1 m vom Rand der Rauchgasaufnahmeleitung (20) entfernt mündet.

6. Ofen nach einem der vorhergehenden Ansprüche, **dadurch gekennzeichnet, dass** jeder Schallinjektor (21, 22, 23, 24, 25, 26) weniger als 0,5 m vom Rand der Rauchgasaufnahmeleitung (3, 20, 30) entfernt mündet.

7. Ofen nach einem der vorhergehenden Ansprüche, **dadurch gekennzeichnet, dass** das Schallinjektionssystem mehrere Schallinjektoren (21, 22, 23, 24, 25) umfasst.

8. Ofen nach einem der vorhergehenden Ansprüche, **dadurch gekennzeichnet, dass** die zu der Wand (33), die die Rauchgasaufnahmeleitung (3, 20, 30) umfasst, senkrechte Impulskomponente (34) des Schallinjektionssystems größer als 5 Newton und bevorzugt größer als 10 Newton ist.

9. Ofen nach einem der vorhergehenden Ansprüche, **dadurch gekennzeichnet, dass** das Gas Luft ist.

10. Ofen nach einem der vorhergehenden Ansprüche, **dadurch gekennzeichnet, dass** der Schallinjektor (6, 31) sein Gas mit mindestens 95 % der Schallgeschwindigkeit einleitet, wobei die Schallgeschwindigkeit die Geschwindigkeit des Schalls bei der Temperatur des eingeleiteten Gases am Auslass des Injektors ist.

11. Verfahren zur Bereitung von geschmolzenem Glas, umfassend das Schmelzen von Glas in dem Ofen nach einem der Ansprüche 1 bis 7, wobei der Schallinjektor (6, 31) einen Strahl eines Gases mit einer Geschwindigkeit von mindestens 80 % der Schallgeschwindigkeit einleitet, wobei die Schallgeschwindigkeit die Geschwindigkeit des Schalls bei der Temperatur des eingeleiteten Gases am Auslass des Injektors ist.

12. Verfahren nach vorhergehendem Anspruch, **dadurch gekennzeichnet, dass** der Schallinjektor (6, 31) sein Gas mit mindestens 95 % der Schallgeschwindigkeit einleitet.

13. Verfahren nach einem der vorhergehenden Verfahrensansprüche, **dadurch gekennzeichnet, dass** die zu der Wand (33), die die Rauchgasaufnahmeleitung (3, 20, 30) umfasst, senkrechte Impulskomponente (34) des Schallinjektionssystems größer als 5 Newton und bevorzugt größer als 10 Newton ist.

14. Verfahren nach einem der vorhergehenden Verfahrensansprüche, **dadurch gekennzeichnet, dass** das Schallinjektionssystem Gas in Höhe von 0,2 bis 5 % und bevorzugt von 0,2 bis 2 % des Normalvolumens des von der Oxidationsmittelzuleitung zugeführten Oxidationsmittels abgibt.

15. Verfahren nach einem der vorhergehenden Verfahrensansprüche, **dadurch gekennzeichnet, dass** die in den Ofen eingeführte Oxidationsmittelmenge in Bezug auf die in den Ofen eingeführte Brennstoffmenge überschüssig ist.

16. Verfahren nach einem der vorhergehenden Verfahrensansprüche, **dadurch gekennzeichnet, dass** die in den Ofen außer über das Schallinjektionssystem eingeführte Oxidationsmittelmenge in Bezug auf die in den Ofen außer über das Schallinjektionssystem eingeführte Brennstoffmenge überschüssig ist.

**17.** Verfahren nach einem der vorhergehenden Verfahrensansprüche, **dadurch gekennzeichnet, dass** das Gas Luft ist.

**Claims**

**1.** An end-fired furnace (1) for melting glass equipped with an overhead burner comprising an inlet duct for oxidizer, comprising 15% to 30% of oxygen, in its upstream wall (33), a duct (3, 20, 30) for receiving the combustion flue gases in its upstream wall (33), and a sonic injection system comprising at least one injector (6, 31) for injecting a jet of a gas at a speed at least equal to 80% of the speed of sound, referred to as a sonic injector, opening into the upstream wall (33) or opening into the duct (3, 20, 30) for receiving the combustion flue gases, the speed of sound being the speed of sound at the temperature of the gas injected at the outlet of the injector, said sonic injector injecting its gas (8) counter-current to the stream (9) of the combustion flue gases that are heading toward the duct (3, 20, 30) for receiving the combustion flue gases.

**2.** The furnace as claimed in the preceding claim, **characterized in that** the cross-sectional area of the oxidizer inlet duct in the upstream wall (33) is within the range extending from 0.5 to 3 $m^2$ and **in that** the cross-sectional area of the duct for receiving the flue gases (3, 20, 30) in the upstream wall (33) is within the range extending from 0.5 to 3 $m^2$.

**3.** The furnace as claimed in one of the preceding claims, **characterized in that** the discharge area of the sonic injection system is within the range extending from 0.2 to 4 $cm^2$.

**4.** The furnace as claimed in one of the preceding claims, **characterized in that** every sonic injector (21, 22, 23, 24, 25, 26) of the sonic injection system opens into the duct (3, 20, 30) for receiving the flue gases or into the upstream wall at a point closer to the duct (3, 20, 30) for receiving the flue gases than to the oxidizer inlet duct.

**5.** The furnace as claimed in one of the preceding claims, **characterized in that** every sonic injector (21, 22, 23, 24, 25, 26) of the sonic injection system opens at less than 1 m from the edge of the duct (20) for receiving the flue gases.

**6.** The furnace as claimed in the preceding claim, **characterized in that** every sonic injector (21, 22, 23, 24, 25, 26) opens at less than 0.5 m from the edge of the duct (3, 20, 30) for receiving the flue gases.

**7.** The furnace as claimed in one of the preceding claims, **characterized in that** the sonic injection system comprises several sonic injectors (21, 22, 23, 24, 25) .

**8.** The furnace as claimed in the preceding claim, **characterized in that** the impulse component (34) of the sonic injection system perpendicular to the wall (33) comprising the duct (3, 20, 30) for receiving the combustion flue gases is greater than 5 newtons and preferably greater than 10 newtons.

**9.** The furnace as claimed in one of the preceding claims, **characterized in that** the gas is air.

**10.** The furnace as claimed in one of the preceding claims, **characterized in that** the sonic injector (6, 31) injects its gas at at least 95% of the speed of sound, the speed of sound being the speed of sound at the temperature of the gas injected at the outlet of the injector.

**11.** A process for preparing molten glass comprising the melting of glass in the furnace from one of claims 1 to 7, the sonic injector (6, 31) injecting a jet of a gas at a speed at least equal to 80% of the speed of sound, the speed of sound being the speed of sound at the temperature of the gas injected at the outlet of the injector.

**12.** The process as claimed in the preceding claim, **characterized in that** the sonic injector (6, 31) injects its gas at at least 95% of the speed of sound.

**13.** The process as claimed in one of the preceding process claims, **characterized in that** the impulse component (34) of the sonic injection system perpendicular to the wall (33) comprising the duct (3, 20, 30) for receiving the combustion flue gases is greater than 5 newtons and preferably greater than 10 newtons.

**14.** The process as claimed in one of the preceding process claims, **characterized in that** the sonic system delivers gas in a proportion of from 0.2% to 5% and preferably from 0.2% to 2% of the Normal volume of oxidizer introduced by the oxidizer inlet duct.

15. The process as claimed in one of the preceding process claims, **characterized in that** the amount of oxidizer introduced into the furnace is in excess relative to the amount of fuel introduced into the furnace.

16. The process as claimed in one of the preceding process claims, **characterized in that** the amount of oxidizer introduced into the furnace not including via the sonic injection system is in excess relative to the amount of fuel introduced into the furnace not including via the sonic injection system.

17. The process as claimed in one of the preceding process claims, **characterized in that** the gas is air.

Fig.1

Fig.3

Fig.2

a)

b)

c)

d)

e)

a)

b)

c)

**Fig. 4**

## RÉFÉRENCES CITÉES DANS LA DESCRIPTION

**Documents brevets cités dans la description**

- EP 2508827 A1
- WO 2008078049 A